# EUROPÄISCHE PATENTSCHRIFT

(11) **EP 2 594 761 B1**
(45) Veröffentlichungstag und Bekanntmachung des Hinweises auf die Patenterteilung: **29.12.2021**
(21) Anmeldenummer: 12191677.9
(22) Anmeldetag: 07.11.2012
(51) Int. Cl.: F01N 13/18, F16L 27/111, F16L 27/11, B23K 9/028, F16L 27/10

(54) **Entkoppelelement für eine Abgasanlage**
Decoupling element for an exhaust system
Elément de découplage pour un système d'échappement

(30) Priorität: 16.11.2011 DE 102011086463
(43) Veröffentlichungstag der Anmeldung: 22.05.2013
(73) Patentinhaber: Purem GmbH, 66539 Neunkirchen (DE)
(72) Erfinder: Schmitt, Markus, 66589 Merchweiler (DE); Schmidt, Michael, 66299 Friedrichsthal (DE)
(74) Vertreter: Ruttensperger Lachnit Trossin Gomoll

(56) Entgegenhaltungen:
- EP-A1- 0 848 143
- EP-A1- 1 235 020
- EP-A1- 2 450 545
- DE-U1-202006 018 593
- JP-A- 2011 075 046
- US-A- 5 542 715
- US-A1- 2003 102 666
- US-A1- 2011 073 209

## Beschreibung

Die vorliegende Erfindung betrifft ein Entkoppelelement für eine Abgasanlage einer Brennkraftmaschine, insbesondere eines Kraftfahrzeugs. Die vorliegende Erfindung betrifft außerdem eine Abgasanlage für eine Brennkraftmaschine, insbesondere eines Kraftfahrzeugs, die mit wenigstens einem derartigen Entkoppelelement ausgestattet ist.

Entkoppelelemente kommen bei Abgasanlagen vorwiegend zur Entkopplung von Lastwechselbewegungen und Schwingungen zwischen Motor und Abgasanlage zum Einsatz. Bspw. kann ein derartiges Entkoppelelement als abgasführender Abschnitt eines Abgasstrangs zwischen einem motornahen Katalysator und einem Mittelschalldämpfer der Abgasanlage im Abgasstrang angeordnet sein. Hierzu umfasst ein derartiges Entkoppelelement einen elastischen, abgasführenden Körper, der an seinen Längsenden auf geeignete Weise in den Abgasstrang eingebunden werden kann. Dabei kann besagter Körper an seinen Längsenden jeweils mit einem Rohrstück verbunden sein oder zumindest an einem Längsende bereits mit einer Abgasbehandlungseinrichtung der Abgasanlage fest verbunden sein. Der Körper des Entkoppelelements besitzt einen für die auftretenden Temperaturen und Drücke der Abgasanlage geeigneten Aufbau und besteht aus entsprechenden Materialien. Am jeweiligen axialen Ende des Körpers kann ein Stützring vorgesehen sein, der einen axialen Endabschnitt des Körpers von außen in der Umfangsrichtung umschließt. Für bestimmte Einbausituationen kann das Entkoppelelement außerdem mit wenigstens einem Flansch ausgestattet sein, der mittels einer Schweißnaht am Stützring befestigt ist. Mit Hilfe des Flansches kann das Entkoppelelement bspw. an eine Abgasbehandlungseinrichtung angeschlossen werden. Ebenso ist es möglich, mit Hilfe eines derartigen Flansches das Entkoppelelement an einer Peripherie der Abgasanlage, z. B. an einem Unterboden eines Fahrzeugs, zu befestigen.

Für den Fall, dass der Stützring in eine Aufnahmeöffnung des Flansches eingesetzt wird, und für den Fall, dass der jeweilige axiale Endabschnitt des Körpers fertigungsbedingt über den Stützring axial vorsteht, besteht beim Herstellen der Schweißverbindung zwischen Flansch und Stützring die Gefahr, dass sich die Schweißnaht vorrangig mit der axialen Stirnseite des Endabschnitts verbindet und nur nachrangig oder gar nicht mit dem Stützring, sodass die Schweißverbindung letztlich nur zwischen der Stirnseite des Körpers und dem Flansch besteht. Denn bei einer derartigen Konstellation entsteht eine innen liegende Schweißstelle, die außerdem durch eine im Flansch ausgebildete, als Axialanschlag für den Stützring dienende Ringschulter weitgehend verdeckt sein kann, was die Zugänglichkeit der Schweißstelle erschwert. Um dies zu vermeiden, ist eine aufwändige Vorbereitung des Entkoppelelements im Bereich des Stützrings erforderlich, beispielsweise um das am Stützring axial überstehende Ende des zugehörigen Endabschnitts zu entfernen.

Die US 2003/0102666 A1 offenbart ein Entkoppelelement gemäß dem Oberbegriff des Anspruchs 1.

Die vorliegende Erfindung beschäftigt sich mit dem Problem, für ein derartiges Entkoppelelement bzw. für eine damit ausgestattete Abgasanlage eine verbesserte oder zumindest eine andere Ausführungsform anzugeben, die sich insbesondere durch eine preiswert realisierbare Schweißverbindung zwischen Flansch und Stützring mit ausreichender Zuverlässigkeit auszeichnet.

Dieses Problem wird erfindungsgemäß durch das Entkoppelelement gemäß Anspruch 1 gelöst. Vorteilhafte Ausführungsformen sind Gegenstand der abhängigen Ansprüche.

Die Erfindung beruht auf dem allgemeinen Gedanken, den Flansch mit einem Stutzen auszustatten, sodass der Stutzen in den vom Stützring umschlossenen Endabschnitt des Körpers axial eingesteckt werden kann. In der Folge kann die Schweißnaht außen umlaufend angebracht werden. Insbesondere durch die bessere Einsehbarkeit der Schweißstelle lässt sich die Schweißnaht nun vergleichsweise einfach so realisieren, dass sie eine axiale Stirnseite des Stützrings mit einem Außenumfang des Stutzens des Flansches verbindet.

Durch die vorgeschlagene Anordnung lässt sich die gewünschte Schweißverbindung zwischen Stützring und Flansch vergleichsweise leicht mit hoher Zuverlässigkeit herstellen. Insbesondere kann somit auf eine kostenintensive Vorbereitung der Schweißstelle verzichtet werden.

Der radial zwischen dem Außenumfang des Stutzens und dem Stützring angeordnete Endabschnitt des Körpers erstreckt sich axial bis zur Stirnseite des Stützrings erstrecken, wobei dann die umlaufende Schweißnaht die Stirnseite des Stützrings unter Einschluss einer axialen Stirnseite des Endabschnitts mit dem Außenumfang des Stutzens verbindet. Insbesondere kann dabei die Stirnseite des Endabschnitts in die Schweißnaht eingebunden werden. Letzteres setzt voraus, dass der jeweilige Werkstoff, aus dem der Körper hergestellt ist, zur Herstellung einer derartigen Schweißverbindung kompatibel ist. Hierdurch ergibt sich eine besonders innige Verbindung mit hoher Festigkeit zwischen Flansch, Stützring und Körper.

Der Körper ist wenigstens zweilagig ausgestaltet sein, wobei eine Innenlage sowie eine Außenlage vorgesehen sind. Die Außenlage umschließt dabei die Innenlage. Dabei erstrecken sich Außenlage und Innenlage bis in den jeweiligen axialen Endabschnitt und dementsprechend axial bis in den Stützring und ggf. auch durch den Stützring hindurch.

Die Innenlage ist als Agraff ausgestaltet. Eine derartige Agraff-Struktur ist bspw. zur druckstabilen und flexiblen Ummantelung von Brauseschläuchen allgemein bekannt. Alternativ kann die Innenlage auch als Wellrohr ausgestaltet sein, das ebenfalls eine hohe Flexibilität besitzt. Die Außenlage ist als Drahtgewebe ausgestaltet. Sowohl die Innenlage als auch die Außenlage sind zweckmäßig aus einem metallischen Werkstoff hergestellt, vorzugsweise eine Eisenlegierung.

Alle Lagen des Körpers erstrecken sich bis zur Stirnseite des Endabschnitts und sind von der Schweißnaht überbrückt, sodass zumindest eine der Lagen in die Schweißnaht eingebunden oder ohne Verbindung mit der Schweißnaht von dieser eingeschlossen ist.

Die Innenlage steht axial über die Außenlage vor. Somit hat die Schweißnaht einen besseren Kontakt zur Innenschicht.

Der Flansch weist einen radial nach außen vom Stutzen abstehenden, vorzugsweise umlaufenden Kragen auf, der zur Befestigung des Flansches an der Peripherie der Abgasanlage oder an einer Abgasbehandlungseinrichtung vorgesehen ist. Insbesondere lässt sich mit Hilfe des Kragens somit eine Ausgestaltung des Entkoppelelements als tragendes Entkoppelelement realisieren.

Sofern das Entkoppelelement, insbesondere über seinen Flansch, an einer Peripherie der Abgasanlage befestigt ist, besitzt das Entkoppelelement zusätzlich eine Tragfunktion, sodass es auch als tragendes Entkoppelelement bezeichnet werden kann. Dient ein derartiger Flansch dagegen nur zur Befestigung des Entkoppelelements an einer Abgasbehandlungseinrichtung, übernimmt das Entkoppelelement in der Regel keine tragende Funktion und kann dementsprechend auch als nichttragendes Entkoppelelement bezeichnet werden.

Der Flansch weist am Kragen distal zum Stutzen einen axial abgewinkelten, vorzugsweise umlaufenden Bord auf. Mit Hilfe eines derartigen, abgewinkelten Bords kann die Steifigkeit des Flansches, insbesondere im Bereich des Kragens signifikant erhöht werden, was eine stabile Fixierung des Flansches an einem dazu komplementären Gegenflansch vereinfacht.

Bei einer vorteilhaften Weiterbildung kann der Bord auf den Körper zu abgewinkelt sein, wodurch das Entkoppelelement im Bereich des Flansches in radialer Richtung vergleichsweise kompakt gestaltet werden kann. Alternativ dazu kann der Bord vom Körper weg abgewinkelt sein, wodurch der Flansch in der Radialrichtung mehr Raum benötigt, um ihn an einem Gegenflansch anbringen zu können, jedoch ist bei einer derartigen Ausführungsform der axiale Raumbedarf des Entkoppelelements im Bereich des Flansches reduziert.

Beim Flansch handelt es sich um ein Blechformteil. Der Stutzen kann dabei als Durchzug ausgestaltet und insbesondere durch Tiefziehen hergestellt sein.

Der Stützring weist einen umlaufenden Kragen auf, der vom Stützring radial nach außen absteht. Der Kragen des Stützrings ist an einem von der Schweißnaht abgewandten axialen Ende des Stützrings angeordnet. Mithilfe eines solchen abgewinkelten Kragens kann die Steifigkeit des Stützrings signifikant verbessert werden.

Eine erfindungsgemäße Abgasanlage zeichnet sich dadurch aus, dass in einen Abgasstrang der Abgasanlage zumindest ein Entkoppelelement der vorstehend beschriebenen Art eingebunden ist. Dabei kann das Entkoppelelement als tragendes Entkoppelelement oder als nicht tragendes Entkoppelelement ausgestaltet sein. Das jeweilige Entkoppelelement kann innerhalb des Abgasstrangs an dem einen Längsende an einen Rohrkörper des Abgasstrangs oder an eine Abgasbehandlungseinrichtung des Abgasstrangs angeschlossen sein. Am anderen Längsende kann das Entkoppelelement an einen anderen Rohrkörper des Abgasstrangs oder an eine andere Abgasbehandlungseinrichtung des Abgasstrangs angeschlossen sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten Längsschnitt durch eine Abgasanlage im Bereich eines Flansches eines Entkoppelelements,
- Fig. 2: eine Ansicht wie in Fig. 1, jedoch bei einer anderen Ausführungsform.

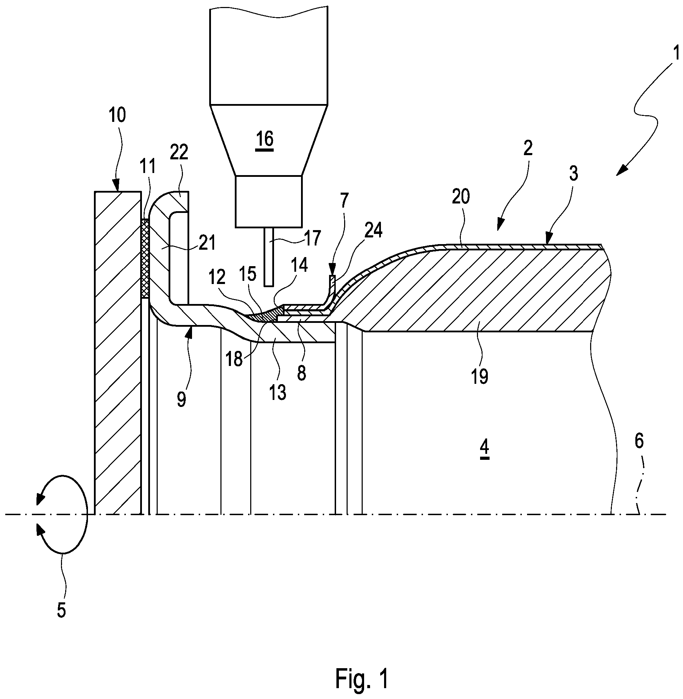

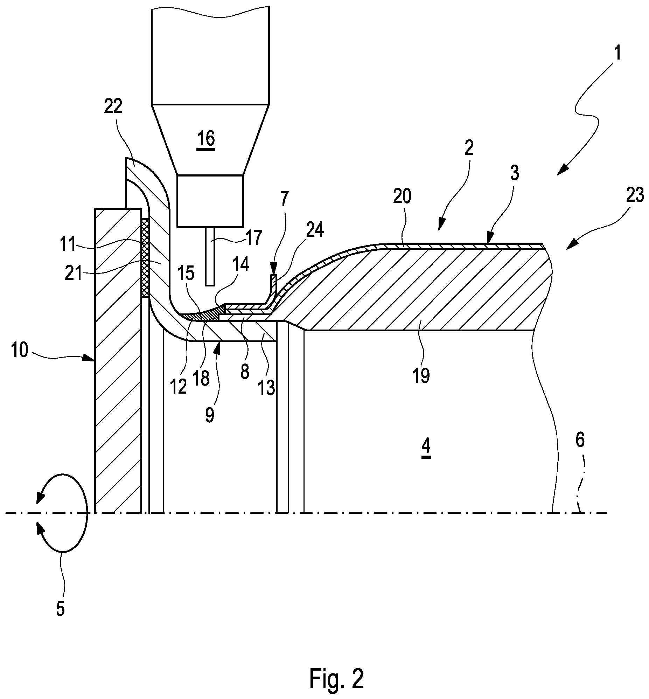

Entsprechend den Figuren 1 und 2 kann eine hier nur teilweise dargestellte Abgasanlage 1 in einem Abgasstrang 23 zumindest ein hier ebenfalls nur teilweise dargestelltes Entkoppelelement 2 aufweisen, bspw. um eine schwingungsmäßige und bewegungsmäßige Entkopplung zwischen einer Brennkraftmaschine und der Abgasanlage 1 zu erreichen, welche die Abgase der Brennkraftmaschine abführt. Zweckmäßig ist die Abgasanlage 1 zusammen mit der Brennkraftmaschine in einem hier nicht gezeigten Fahrzeug untergebracht und dabei zweckmäßig an einem Unterboden des Fahrzeugs angeordnet. Der Abgasstrang 23 enthält z.B. einen nicht gezeigten Katalysator sowie einen nicht gezeigten Schalldämpfer.

Das Entkoppelelement 2 umfasst einen elastischen Körper 3, der zum Führen von Abgas als Hohlkörper ausgestaltet ist bzw. einen Hohlraum 4 in einer Umfangsrichtung 5 umschließt. Die Umfangsrichtung 5 ist dabei auf eine Längsmittelachse 6 des Entkoppelelements 2 bezogen. Das Entkoppelelement 2 weist außerdem zumindest einen Stützring 7 auf, der fest mit dem Körper 3 verbunden ist. Außerdem umschließt der Stützring 7 einen axialen Endabschnitt 8 des Körpers 3 in der Umfangsrichtung 5 von außen bzw. an einer Außenseite. Dementsprechend ist der Stützring 7 außen auf den Endabschnitt 8 aufgesteckt bzw. ist der Endabschnitt 8 in den Stützring 7 eingesteckt. Stützring 7 und Endabschnitt 8 sind auf geeignete Weise fest miteinander verbunden, bspw. mittels einer hier nicht gezeigten Schweißverbindung oder mittels einer hier nicht gezeigten Lötverbindung.

Das Entkoppelelement 2 weist außerdem zumindest einen Flansch 9 auf, mit dem das Entkoppelelement 2 bspw. an einem Gegenflansch 10 befestigt werden kann. Der Gegenflansch 10 kann bspw. an einer Abgasbehandlungseinrichtung der Abgasanlage 1 ausgebildet sein. Ebenso kann der Gegenflansch 10 an einer Peripherie der Abgasanlage 1 ausgebildet sein. Dementsprechend kann das Entkoppelelement 2 als tragendes Entkoppelelement 2 oder als nicht tragendes Entkoppelelement 2 ausgestaltet sein. Der Flansch 9 ist im Beispiel jeweils über ein ringscheibenförmiges Dichtelement 11 am Gegenflansch 10 festgelegt, bspw. mittels hier nicht gezeigter Schraubverbindungen.

Der Flansch 9 ist mittels einer Schweißnaht 12 am Stützring 7 befestigt. Zweckmäßig ist die Schweißnaht 12 dabei in der Umfangsrichtung 5 umlaufend ausgestaltet. Damit die Schweißnaht 12 außen angeordnet bzw. von außen angebracht werden kann, besitzt der Flansch 9 einen Stutzen 13, der in den vom Stützring 9 umschlossenen Endabschnitt 8 des Körpers 3 eingesteckt ist. Die Schweißnaht 12 kann nun außen umlaufend so angebracht werden, dass sie eine vom Körper 3 abgewandte axiale Stirnseite 14 des Stützrings 7 mit einem Außenumfang 15 des Stutzens 13 verbindet. Durch diese Maßnahme ist die Schweißnaht 12 vergleichsweise einfach herstellbar, da die für die Herstellung der Schweißnaht 12 vorgesehene außen liegende, umlaufende Schweißstelle für ein Schweißwerkzeug 16 relativ gut zugänglich ist, sodass bspw. ein Schweißdraht 17 nicht durch einen Hinterschnitt oder dergleichen behindert ist. In der Folge kann mit hoher Zuverlässigkeit die Schweißnaht 12 so realisiert werden, dass sie besagte Stirnseite 14 des Stützrings 7 sicher und direkt mit dem Außenumfang 15 des Stutzens 13 verbindet.

Bei den hier gezeigten Beispielen erstreckt sich der radial zwischen dem Außenumfang 15 des Stutzens 13 und dem Stützring 7 angeordnete Endabschnitt 8 des Körpers 3 axial bis zur Stirnseite 14 des Stützrings 7. Die umlaufende Schweißnaht 12 kann nun die Stirnseite 14 des Stützrings 7 unter Einschluss einer axialen Stirnseite 18 des Endabschnitts 8 mit dem Außenumfang 15 des Stutzens 13 verbinden. Insbesondere kann dabei besagte Stirnseite 18 des Endabschnitts 8 in die Schweißnaht 12 eingebunden werden, sodass letztlich der Endabschnitt 8 über die Schweißnaht 12 sowohl mit dem Stutzen 13 als auch mit dem Stützring 7 verschweißt ist.

Zweckmäßig ist der Körper 3 zumindest zweilagig ausgestaltet. Dementsprechend besitzt der Körper 3 zumindest eine Innenlage 19 und eine Außenlage 20, welche die Innenlage 19 in der Umfangsrichtung 5 umschließt. Die Außenlage 20 ist zweckmäßig als Drahtgewebe ausgestaltet. Die Innenlage 19 kann als Agraff oder als Wellrohr ausgestaltet sein. Sofern der Körper 3 zweilagig oder mehrlagig ausgestaltet ist, können sich die beiden Lagen 19, 20 bzw. können sich alle Lagen 19, 20 des Körpers 3 bis zur Stirnseite 18 des Endabschnitts 8 erstrecken und dementsprechend von der Schweißnaht 12 überbrückt werden. Sofern wie hier gezeigt, die axiale Stirnseite 18 des Endabschnitts 18 axial über die Stirnseite 14 des Stützrings 7 übersteht, können die einzelnen Lagen 19, 20 des Körpers 3 in die Schweißnaht 12 eingebunden werden.

Bei den hier gezeigten Ausführungsformen besitzt der Flansch 9 jeweils einen radial nach außen vom Stutzen 13 abstehenden, zweckmäßig in der Umfangsrichtung 5 umlaufenden Kragen 21. Durch den gegenüber dem Stutzen 13 abgewinkelten Kragen 21 besitzt der Flansch 9 eine vergleichsweise hohe Formstabilität. Der Kragen 21 kann bspw. zum Befestigen des Flansches 9 am Gegenflansch 10 verwendet werden. Zur Aussteifung des Flansches 9 im Bereich des Kragens 21 kann am Kragen 21 distal zum Stutzen 13 ein axial abgewinkelter, vorzugsweise in der Umfangsrichtung 5 umlaufender Bord 22 ausgebildet sein. Bei der in Fig. 1 gezeigten Ausführungsform ist der Bord 22 auf den Körper 3 zu vom Kragen 21 abgewinkelt. Hierdurch baut der Flansch 9 in der radialen Richtung vergleichsweise kompakt. Bei der in Fig. 2 gezeigten Ausführungsform ist der Bord 22 vom Körper 3 weg vom Kragen 21 abgewinkelt, wodurch der Flansch 9 in der Axialrichtung vergleichsweise kompakt baut.

Gemäß der Ausführungsformen der Fig. 1 und 2 weist der Stützring 7 einen umlaufenden Kragen 24 auf, der vom Stützring 7 radial nach außen absteht. Insbesondere ist der Kragen 24 des Stützrings 7 an einem von der Schweißnaht 12 abgewandten axialen Ende des Stützrings 7 angeordnet.

## Patentansprüche

1. Entkoppelelement für eine Abgasanlage (1) einer Brennkraftmaschine,
- mit einem elastischen, abgasführenden Körper (3),
- mit mindestens einem fest mit dem Körper (3) verbundenen Stützring (7), der einen axialen Endabschnitt (8) des Körpers (3) außen in der Umfangsrichtung (5) umschließt,
- mit mindestens einem Flansch (9), der mittels einer Schweißnaht (12) am Stützring (7) befestigt ist,
- wobei der Stützring (7)) an einem von der Schweißnaht (12) abgewandten axialen Ende einen umlaufenden Kragen (24) aufweist, der radial nach außen vom Stützring (7) absteht,
- wobei der Flansch (9) einen Stutzen (13) aufweist, der in den vom Stützring (7) umschlossenen Endabschnitt (8) des Körpers (3) eingesteckt ist,
- wobei die Schweißnaht (12) außen umlaufend ausgestaltet ist und eine vom Körper (3) abgewandte axiale Stirnseite (14) des Stützrings (7) mit dem Außenumfang (15) des Stutzens (13) des Flansches (9) verbindet,
- wobei sich der radial zwischen dem Außenumfang (15) des Stutzens (13) und dem Stützring (7) angeordnete Endabschnitt (8) des Körpers (3) axial bis zur Stirnseite (14) des Stützrings (7) erstreckt, wobei die umlaufende Schweißnaht (12) die Stirnseite (14) des Stützrings (7) unter Einschluss einer axialen Stirnseite (18) des Endabschnitts (8) mit dem Außenumfang (15) des Stutzens (13) verbindet und die Stirnseite (18) des Endabschnitts (8) in die Schweißnaht (12) eingebunden ist,
- wobei der Körper (3) wenigstens zweilagig ausgestaltet ist und eine Innenlage (19) sowie eine die Innenlage (19) umschließende Außenlage (20) aufweist,
- wobei die Innenlage (19) als Agraff oder als Wellrohr ausgestaltet ist und die Außenlage (20) als Drahtgewebe ausgestaltet ist,
- wobei sich alle Lagen (19,20) des Körpers (3) bis zur Stirnseite (18) des Endabschnitts (8) erstrecken und von der Schweißnaht (12) überbrückt sind,
**dadurch gekennzeichnet,**
**dass** die Innenlage (19) axial über die Außenlage (20) vorsteht, und dass der Flansch (9) mit einem radial nach außen vom Stutzen (13) abstehenden, umlaufenden Kragen (21) und einem am Kragen (21) distal zum Stutzen (13) axial abgewinkelten Bord (22) als Blechumformteil ausgebildet ist.

2. Entkoppelelement nach Anspruch 1,
**dadurch gekennzeichnet,**
**dass** der Bord (22) auf den Körper (3) zu abgewinkelt ist.

3. Entkoppelelement nach Anspruch 1,
**dadurch gekennzeichnet,**
**dass** der Bord (22) vom Körper (3) weg abgewinkelt ist.

4. Abgasanlage für eine Brennkraftmaschine, insbesondere eines Kraftfahrzeugs, mit mindestens einem Entkoppelelement (2) nach einem der Ansprüche 1 bis 3.

## Claims

1. Decoupling element for an exhaust system (1) of a combustion engine, comprising
- an elastic body (3) conducting exhaust gas,
- at least one support ring (7) connected to the body (3) in a fixed manner, enclosing an axial end portion (8) of the body (3) in the circumferential direction (5) on an outside,
- with at least one flange (9) fastened to the support ring (7) by means of a welding seam (12),
- wherein the support ring (7) comprises a circumferential collar (24) at an axial end facing away from the welding seam (12) projecting radially outwards from the support ring (7),
- wherein the flange (9) comprises a connecting piece (13), inserted into the end portion (8) of the body (3) enclosed by the support ring (7),
- wherein the welding seam (12) is formed circumferentially on the outside and connects an axial end face (14) of the support ring (7) facing away from the body (3) to the outer circumference (15) of the connecting piece (13) of the flange (9),
- wherein the end portion (8) of the body (3) arranged radially between the outer circumference (15) of the connecting piece (13) and the support ring (7) axially extends as far as to the end face (14) of the support ring (7), wherein the circumferential weld seam (12) connects the end face (14) of the support ring (7) to the outer circumference (15) of the connecting piece (13) including an axial end face (18) of the end portion (8), and the end face (18) of the end portion (8) is incorporated in the weld seam (12),
- wherein the body (3) is adapted with at least two layers and comprises an inner layer (19) as well as an outer layer (20) enclosing the inner layer (19),
- wherein the inner layer (19) is configured as flex hose or as corrugated pipe, and wherein the outer layer (20) is configured as wire mesh,
- wherein all layers (19, 20) of the body (3) extend as far as to the end face (18) of the end portion (8) and are bridged by the weld seam (12),
**characterized in that**
the inner layer (19) axially extends beyond the outer layer (20) and that the flange (9) is configured with a circumferential collar (21) extending radially away from the connecting piece (13) and an axially angled-off rim (22) at the collar (21) distally of the connecting piece (13) adapted as a sheet metal part.

2. Decoupling element according to claim 1,
**characterized in that**
the rim (22) is angled-off in a direction facing toward the body (3).

3. Decoupling element according to claim 1,
**characterized in that**
the rim (22) is angled-off in a direction facing away from the body (3).

4. Exhaust system for a combustion engine, in particular of a motor vehicle, with at least one decoupling element (2) according to one of claims 1 to 3.

## Revendications

1. Elément de découplage pour un système d'échappement (1) d'un moteur à combustion, comprenant
- un corps élastique (3) conduisant les gaz d'échappement,
- au moins un anneau de support (7) reliée au corps (3) de manière fixe, entourant une partie d'extrémité axiale (8) du corps (3) dans la direction circonférentielle (5) sur un côté extérieur,
- avec au moins une bride (9) fixée à l'anneau de support (7) au moyen d'un joint de soudure (12),
- dans lequel l'anneau de support (7) comprend un col circonférentiel (24) à une extrémité axiale tournée à l'opposé du joint de soudure (12) faisant saillie radialement vers l'extérieur de l'anneau de support (7),
- dans lequel la bride (9) comprend une pièce de connexion (13), insérée dans la partie d'extrémité (8) du corps (3) enfermé par l'anneau de support (7),
- dans lequel le joint de soudure (12) est formé circonférentiellement à l'extérieur et relie une face frontale axiale (14) de l'anneau de support (7) tournée à l'opposé du corps (3) à la circonférence extérieure (15) de la pièce de connexion (13) de la bride (9),
- dans lequel la partie d'extrémité (8) du corps (3) disposée radialement entre la circonférence extérieure (15) de la pièce de connexion (13) et l'anneau de support (7) s'étend axialement jusqu'à la face frontale (14) de l'anneau de support (7), dans lequel le joint de soudure circonférentiel (12) relie la face frontale (14) de l'anneau de support (7) à la circonférence extérieure (15) de la pièce de connexion (13) comprenant une face frontale axiale (18) de la partie d'extrémité (8), et la face frontale (18) de la partie d'extrémité (8) est incorporée dans le joint de soudure (12),
- dans lequel le corps (3) est adapté avec au moins deux couches et comprend une couche intérieure (19) et une couche extérieure (20) enfermant la couche intérieure (19),
- dans lequel la couche intérieure (19) est configurée comme un tuyau flexible Agraff ou comme un tube ondulé, et dans lequel la couche extérieure (20) est configurée comme un treillis métallique,
- dans lequel toutes les couches (19, 20) du corps (3) s'étendent jusqu'à la face frontale (18) de la partie d'extrémité (8) et sont pontées par le joint de soudure (12),
**caractérisé en ce que**
la couche intérieure (19) s'étend axialement au-delà de la couche extérieure (20) et que la bride (9) est configurée avec un col circonférentiel (21) faisant saillie radialement à partir de la pièce de connexion (13) et un bord (22) incliné axialement sur le col (21), à l'opposé de la pièce de connexion (13), et conçu comme une pièce en tôle.

2. Elément de découplage selon la revendication 1,
**caractérisé en ce que**
le bord (22) est incliné dans une direction orientée vers le corps (3).

3. Elément de découplage selon la revendication 1,
**caractérisé en ce que**
le bord (22) est incliné dans une direction opposée au corps (3).

4. Système d'échappement d'un moteur à combustion, notamment d'un véhicule automobile, comportant au moins un élément de découplage (2) selon l'une des revendications 1 à 3.
